# EUROPÄISCHE PATENTSCHRIFT

(11) **EP 0 761 384 B1**
(45) Veröffentlichungstag und Bekanntmachung des Hinweises auf die Patenterteilung: **12.04.2000**
(21) Anmeldenummer: 96111071.5
(22) Anmeldetag: 10.07.1996
(51) Int. Cl.: B23Q 3/157

(54) **Werkzeugmaschine**
Machine tool
Machine-outil

(30) Priorität: 02.09.1995 DE 19532399; 05.10.1995 DE 19537071
(43) Veröffentlichungstag der Anmeldung: 12.03.1997
(73) Patentinhaber: CHIRON-WERKE GMBH & CO. KG, 78532 Tuttlingen (DE)
(72) Erfinder: Schweizer, Anton Richard, 78573 Wurmlingen (DE); Haninger, Rudolf, 78606 Seitingen-Oberflacht (DE)
(74) Vertreter: Otten, Hajo, Dr.-Ing.

(56) Entgegenhaltungen:
- DE-A- 1 777 295
- DE-A- 1 777 296
- FR-A- 2 131 763
- FR-A- 2 564 012
- FR-A- 2 568 802

## Beschreibung

Die Erfindung betrifft eine Werkzeugmaschine mit mindestens einer Spindel, der zumindest ein Werkzeugwechsler zum Einwechseln von Werkzeugen zugeordnet ist, wobei die Spindel mit einem Plandrehkopf bestückt ist, der Mittel zum numerisch gesteuerten Verstellen eines Plandrehwerkzeugs in einer Richtung senkrecht zur Achse der Spindel umfaßt, wobei der der Spindel zugeordnete Werkzeugwechsler einen Greifarm umfaßt, an dessen freiem Ende ein Greifer angeordnet ist, womit der Werkzeugwechsler zum Einwechseln von Werkzeugen in den Plandrehkopf ausgebildet ist.

Eine Werkzeugmaschine der vorstehend genannten Art ist aus der FR A 2 564 012 A bekannt.

Eine weitere Werkzeugmaschine, die eine Spindel aufweist, der zumindest ein Werkzeugwechsler zum Einwechseln von Werkzeugen zugeordnet ist, ist aus der EP 0 360 168 B1 bekannt.

Bei der aus der EP 0 360 168 B1 bekannten Werkzeugmaschine handelt es sich um ein Verarbeitungszentrum, das als Mehrspindelmaschine ausgebildet ist. Dabei sind in völlig symmetrischer Bauweise zwei Spindeln nebeneinander angeordnet, denen jeweils ein Werkzeugwechsler zugeordnet ist. Die beiden Werkzeugwechsler umfassen jeweils zwei Paare von Greifarmen, von denen jeweils einer auf einer Seite der Spindel angeordnet ist. Die bekannte Werkzeugmaschine weist ein Werkzeugmagazin auf, das in der Draufsicht die Gestalt eines Hufeisens aufweist und in einer Horizontalebene angeordnet ist. Die beiden freien Enden des Hufeisens greifen seitlich um die Spindel herum. Sie sind am vorderen Ende mit einer Übergabeposition für Werkzeuge versehen. Die Werkzeuge werden in dem Hufeisenmagazin entlang einer Endlosbahn mittels einer Förderkette befördert. Durch die beiden Werkzeuggreifer mit jeweils zwei Greifarmen können nun Werkzeuge von den beiden Übergabepositionen, die sich seitlich und oberhalb der Werkzeugaufnahme der beiden Spindeln befinden, in die Werkzeugaufnahmen überführt werden.

Bei der bekannten Werkzeugmaschine liegen auf beiden Seiten, d.h. hinsichtlich beider Spindeln, vollkommen übereinstimmende Verhältnisse vor. Die Werkzeuge können daher in beliebiger Reihenfolge in beiden Spindeln eingesetzt werden.

Es ist darüber hinaus bekannt, bei Bearbeitungszentren sogenannte Aus- oder Plandrehköpfe einzusetzen (siehe die eingangs genannte FR 2 564 012 A). Hierunter versteht man Anordnungen, mit denen es z.B. möglich ist, größere Oberflächen an Werkstücken planzudrehen. Die Besonderheit bei diesen Plandrehköpfen besteht dabei darin, daß ein Plandrehwerkzeug in radialer Richtung zur Spindelachse verstellt werden kann, so daß der Drehdurchmesser variabel ist. Auf diese Weise erhält man bei numerisch gesteuerten Bearbeitungszentren eine weitere numerische Achse.

Bei den bekannten Bearbeitungszentren mit Plandrehkopf wird z.B. der gesamte Plandrehkopf inklusive Plandrehwerkzeug montiert bzw. gegen einen kompletten neuen Plandrehkopf mit Plandrehwerkzeug ausgetauscht. Aufgrund des sehr hohen Gewichtes dieser Anordnungen geschieht dies regelmäßig durch manuelles Montieren. Der radiale Abstand der Schneide des Plandrehwerkzeugs von der Spindelachse wird dabei in der Regel ebenfalls manuell eingestellt.

Andererseits ist es auch bekannt, den Plandrehkopf an der Spindel der Werkzeugmaschine zu belassen, und die Plandrehwerkzeuge von Hand auszutauschen. Der Plandrehkopf weist in diesem Falle eine Werkzeugaufnahme mit einem Spreizglied zum formschlüssigen Ergreifen und Spannen von die Werkzeuge haltenden Werkzeughaltern auf, wobei das Spreizglied mittels eines Spindeltriebes betätigbar ist. Dieser Spindeltrieb wird nun von Hand dadurch betätigt, daß durch die den Plandrehkopf tragende Spindel hindurch, die zu diesem Zweck als Hohlspindel ausgebildet ist, eine Art Schraubendreher hindurchgesteckt und das Spreizglied angezogen oder zur Freigabe des Werkzeughalters gelöst wird. Die Werkzeughalter werden dabei von Hand in die Werkzeugaufnahme des Plandrehkopfes eingesetzt bzw. aus dieser entnommen.

Schließlich ist es weiter bekannt, eine Werkzeugmaschine mit einer ganzen Reihe von Werkzeugwechslern zu versehen, von denen z.B. zwölf Stück im Kreis um die Spindel herum angeordnet sind. Jeder Werkzeugwechsler weist eine Magazinstellung auf, in der er von der Spindel zurückgezogen ist und das von seinem Greifer getragene Werkzeug in sicherer Entfernung zu der Spindel hält. Diese Greifer sind nun wahlweise unter die Spindel bringbar, wo das Werkzeug durch geeignete Maßnahmen in die Spindel eingekoppelt werden kann. Während der Bearbeitung des Werkstückes verbleibt der Greifer an dem Werkzeug, so daß der Werkzeugwechsel hier sehr schnell erfolgen kann. Nach erfolgtem Bearbeitungsgang wird nämlich der Werkzeugwechsler mit dem auszuwechselnden Werkzeug von der Spindel zurückgezogen, während der Werkzeugwechsler mit dem einzuwechselnden Werkzeug gleichzeitig der Werkzeugaufnahme in der Spindel zugeführt wird. Dadurch, daß der Greifer während der Bearbeitung an dem Werkzeug verbleibt, entfallen zusätzliche Bewegungen des Werkzeugwechslers.

Der Erfindung liegt demgegenüber die Aufgabe zugrunde, eine Werkzeugmaschine der eingangs genannten Art dahingehend weiterzubilden, daß die Spindel zwar Plandrehaufgaben ausführen kann, dies jedoch unter eigenständiger numerischer Kontrolle sämtlicher Parameter und bei erleichtertem Wechsel und hoher Stellungsgenauigkeit des Plandrehwerkzeugs während des Einwechselns.

Diese Aufgabe wird erfindungsgemäß bei der eingangs erwähnten Werkzeugmaschine dadurch gelöst, daß der Greifer einen Werkzeughalter formschlüssig umfaßt, daß dem Greifer erste Rastmittel zum Verrasten des Werkzeughalters in Achsrichtung sowie zweite Rastmittel zum Verrasten des Werkzeughalters in Umfangsrichtung zugeordnet sind, und daß die Rastmittel separat betätigbar sind.

Die der Erfindung zugrundeliegende Aufgabe wird auf diese Weise vollkommen gelöst.

Bei der erfindungsgemäßen Werkzeugmaschine ist nämlich die Spindel fest mit dem Plandrehkopf versehen, während das Auswechseln der Plandrehwerkzeuge über einen üblichen Werkzeugwechsler abläuft. Auf diese Weise wird bereits die Variabilität der Anordnung deutlich vergrößert, weil ebenso wie bei herkömmlichen Werkzeugwechslern auch bei dem Plandrehkopf ein schnelles Auswechseln unterschiedlicher Plandrehwerkzeuge möglich ist. Ferner hat das feste Anbringen des Plandrehkopfs an der Spindel den Vorteil, daß auch die radiale Verstellung des Plandrehwerkzeugs intern ausgeführt werden kann, insbesondere über eine numerisch steuerbare Zusatzachse. Auf diese Weise wird daher der Gesamtvorgang noch umfassender automatisiert. Selbstverständlich kann auch ein übliches Werkzeug, wie z.B. ein Fräser oder Bohrer, in den Plandrehkopf eingewechselt werden, wobei dieser dann eine mittige oder zentrierte Stellung zu der Spindel einnehmen muß, so daß auch Bohr- und Fräsarbeiten mit der neuen Werkzeugmaschine durchgeführt werden können. Auf diese Weise wird für einen breiten Anwendungsbereich der neuen Werkzeugmaschine gesorgt. Selbstverständlich kann es auch möglich sein, die Werkzeugmaschine mit einer zweiten Spindel auszurüsten, der eigene Werkzeugwechsler zugeordnet sind, so daß der Plandrehkopf lediglich Plandrehwerkzeuge aufnimmt, während die zweite Spindel für andere Werkzeuge vorgesehen ist.

An dem freien Ende des Greifarmes ist dabei der Greifer angeordnet, der den Werkzeughalter formschlüssig umfaßt. Diese Maßnahme hat den Vorteil, daß das Werkzeug mit definierter Schneidenstellung in die Spindel des Plandrehkopfes einsetzbar ist.

Ferner dienen die verschiedenen Rastmittel dazu, um diese definierte Stellung des Werkzeugs auch während des Überführens von der Magazinstellung in die Arbeitsstellung aufrechtzuerhalten. Schließlich kann je nach Einsatzfall der Greifer während des Arbeitens des Plandrehwerkzeugs an diesem verbleiben oder von diesem entfernt werden. Wenn das Plandrehwerkzeug jedoch radial verfahren werden muß, wird der Greifer vorher zurückgezogen. Dies ist wegen der erfindungsgemäß vorgesehenen Rastmittel auch möglich.

Bei einer bevorzugten Weiterbildung dieses Ausführungsbeispiels sind in einer Arbeitsstellung, in der der Werkzeughalter in einer Werkzeugaufnahme des Plandrehkopfes eingespannt ist, die ersten Rastmittel verrastet und die zweiten Rastmittel nicht verrastet.

Diese Maßnahme hat den Vorteil, daß das Werkzeug bis zum Ende des Einspannvorganges hin in vertikaler Richtung gesichert ist, wobei die insoweit vorliegende Verrastung auch während des Arbeitens des Werkzeuges aufrechterhalten werden kann, wie bereits erwähnt. Die zweiten Rastmittel sind hingegen nicht mehr verrastet, weil bei eingespanntem Werkzeug die Umfangsrichtung des Werkzeuges definiert ist und dieses ansonsten nicht gedreht werden könnte.

Besonders bevorzugt ist, wenn in einer Magazinstellung, in der der Werkzeughalter sich im Abstand von einer Werkzeugaufnahme des Plandrehkopfes befindet, die ersten Rastmittel manuell entrastbar sind.

Diese Maßnahme hat den Vorteil, daß der Bestückungsvorgang in der Magazinstellung erleichtert wird. Dies gilt insbesondere dann, wenn die Werkzeugmaschine mehrere Werkzeugwechselvorrichtungen aufweist, die auch in ihrer Magazinstellung das Werkzeug in ihrem Greifer halten, wie dies eingangs im Zusammenhang mit einer bekannten Werkzeugmaschine bereits erörtert wurde.

Eine gute Wirkung wird dabei dann erzielt, wenn die ersten Rastmittel unter Federkraft in Eingriff stehen.

Diese Maßnahme hat den Vorteil, daß die erste Verrastung in technisch sehr einfacher Weise permanent aufrechterhalten werden kann.

Bei weiteren Ausführungsbeispielen der Erfindung umfassen die Mittel zum Verstellen des Plandrehwerkzeugs ein Getriebe, das eine in Richtung der Achse der Spindel wirkende Kraft in eine in der Richtung senkrecht zur Achse wirkende Betätigungskraft zum Verstellen des Plandrehwerkzeugs umsetzt.

Diese Maßnahme hat den Vorteil, daß in einem Spindelstock, dessen Elemente in vertikaler Richtung organisiert sind, eine leichte Verstellung des Plandrehwerkzeugs möglich wird.

Dies gilt insbesondere dann, wenn das Getriebe eine 45°-Verzahnung mit Gegenverzahnung umfaßt.

Diese Maßnahme hat nämlich den Vorteil, daß eine Vertikalbewegung in äußerst einfacher Weise in eine Horizontalbewegung umgesetzt wird.

Bei einer bevorzugten Weiterbildung des Ausführungsbeispiels wird die in Richtung der Achse wirkende Kraft mittels einer Zustellstange erzeugt, wobei die Zustellstange über einen Spindeltrieb in Richtung der Achse verschiebbar ist.

Diese Maßnahme hat den Vorteil, daß über einen motorischen Drehantrieb in einfacher Weise eine Vertikalbewegung der Zustellstange erzeugt wird, die wiederum in die Radialbewegung des Plandrehwerkzeuges umgesetzt wird.

Bei weiteren Ausführungsbeispielen der Erfindung, bei denen der Plandrehkopf eine Werkzeugaufnahme mit einem Spreizglied zum formschlüssigen Ergreifen und Spannen des Werkzeughalters umfaßt, ist das Spreizglied durch Drehen der Spindel zum Spannen und/oder Lösen des Werkzeughalters betätigbar.

Diese Maßnahme hat den Vorteil, daß die Spannmittel im Plandrehkopf völlig autonom arbeiten, so daß die Werkzeugaufnahme beliebig in Radialrichtung verschiebbar ist, ohne daß die Spannkraft der Spannmittel unterbrochen wird. Dies ist bei herkömmlichen Spannmechanismen nicht möglich, bei denen kontinuierlich eine Zugkraft auf die Spannmittel ausgeübt wird, die üblicherweise über die gesamte Länge des Spindelstocks erzeugt und aufrechterhalten wird. Dadurch, daß jetzt durch einfaches Drehen der den Plandrehkopf haltenden Spindel der Werkzeughalter gespannt/gelöst werden kann, kann auf einen weiteren Antrieb zum automatischen Lösen/Spannen des Werkzeughalters verzichtet werden. Die beim Stand der Technik von Hand vorgenommenen Maßnahmen des Lösens und Spannens des Werkzeughalters werden somit ebenfalls auf sehr einfache und vorteilhafte Weise automatisiert, ohne daß zusätzliche konstruktive Maßnahmen erforderlich sind, um die gattungsbildende Werkzeugmaschine umzukonstruieren.

Dabei ist es bevorzugt, wenn dem Spreizglied ein Spindeltrieb zugeordnet ist, der durch Verdrehen der drehfest mit der Spindel verbundenen Werkzeugaufnahme betätigt wird.

Diese Maßnahme ist konstruktiv von Vorteil, weil die zum Spannen/Lösen des Werkzeughalters erforderliche Vertikalbewegung des Spreizgliedes durch den Spindeltrieb aus der über die Werkzeugaufnahme von der Spindel übermittelte Drehung abgeleitet werden kann.

Bei einer Weiterbildung dieses Ausführungsbeispiels wird der Spindeltrieb durch einen Außengewindeabschnitt am Spreizglied sowie einen Innengewindeabschnitt an der Werkzeugaufnahme gebildet.

Diese Maßnahme hat den Vorteil, daß der Spindeltrieb zum Einspannen des Werkzeugs in besonders einfacher Weise realisiert werden kann.

In Weiterbildung dieses Ausführungsbeispiels weist das Spreizglied einen Mitnehmer auf, über den der Außengewindeabschnitt im Innengewindeabschnitt verdrehbar ist. Der Mitnehmer ist dabei vorzugsweise mittels einer Kuppelstange verdrehbar, die an einem Ende mit einem zum Mitnehmer komplementären Gegenstück versehen ist. Der Plandrehkopf ist dabei insbesondere derart verstellbar, daß der Mitnehmer und das Gegenstück in eine miteinander fluchtende Stellung bringbar sind, wobei in bevorzugter Weise das Spreizglied drehfest fixierbar ist, derart, daß der Spindeltrieb durch Verdrehen der Werkzeugaufnahme betätigt wird.

Diese Maßnahmen haben den Vorteil, daß in der fluchtenden Stellung das Spreizglied über die Kuppelstange vom anderen Ende des Spindelstocks her betätigbar ist, wobei "betätigbar" vorzugsweise so zu verstehen ist, daß das Spreizglied festgehalten wird, während die eigentliche Anzugsbewegung des Spindeltriebs durch ein Anfahren des Spindelrotors erreicht wird.

Weitere Vorteile ergeben sich aus der Beschreibung und der beigefügten Zeichnung. Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine äußerst schematisierte Vorderansicht auf ein Ausführungsbeispiel einer erfindungsgemäßen Werkzeugmaschine;
- Fig. 2: in vergrößertem Maßstab eine Querschnittsdarstellung entlang der Linie II-II von Fig. 1;
- Fig. 3: eine noch weiter vergrößerte Detailansicht zur Erläuterung eines Werkzeugwechslers, wie er an der Werkzeugmaschine gemäß Fig. 1 und 2 Verwendung finden kann;
- Fig. 4: in noch weiter vergrößertem Maßstab eine Draufsicht auf einen Greifer in einem Werkzeugwechsler gemäß Fig. 3.

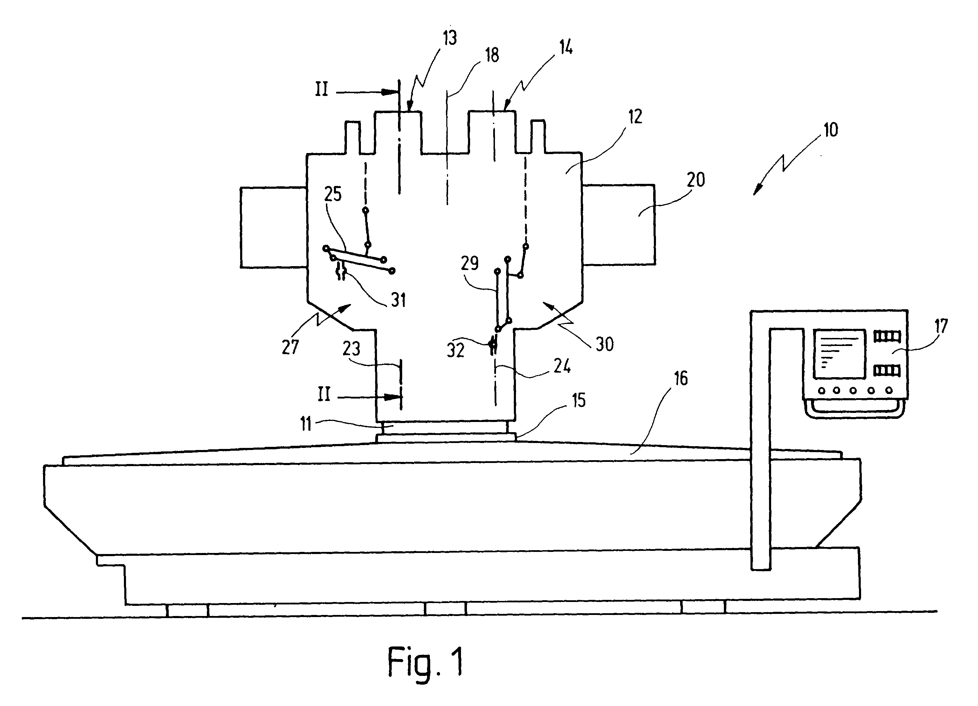

In Fig. 1 bezeichnet 10 insgesamt eine Werkzeugmaschine. Unter "Werkzeugmaschine" ist im vorliegenden Fall insbesondere ein sogenanntes Bearbeitungszentrum zu verstehen, d.h. eine numerisch gesteuerte Werkzeugmaschine, in der insbesondere Bohr-, Fräs-und Dreharbeiten ausgeführt werden. Bearbeitungszentren dieser Art verfügen entweder über ein Werkzeugmagazin, in dem eine Vielzahl unterschiedlicher Werkzeuge in Werkzeughaltern gespeichert sind, oder über eine große Zahl von Werkzeugwechslern, in denen die Werkzeuge zwischen zwei Rüstzeiten in deren Magazinstellung permanent gehalten sind. Mittels eines oder mehrerer solcher Werkzeugwechsler werden diese Werkzeuge je nach Bedarf in eine Spindel des Bearbeitungszentrums eingewechselt, damit ein bestimmter Bearbeitungsvorgang unter numerischer Kontrolle ablaufen kann. Nach Beendigung des jeweiligen Bearbeitungsschrittes wird das soeben benutzte Werkzeug ausgespannt und ein neues Werkzeug für den nächsten Bearbeitungsvorgang eingespannt. Bearbeitungszentren dieser Art sind allgemein bekannt.

Die Werkzeugmaschine 10 in Fig. 1 ist eine sogenannte Fahrständermaschine. Dabei ist ein Fahrständer 11 mit einem Spindelstock 12 versehen. Der Spindelstock 12 ist am Fahrständer 11 insbesondere in Vertikalrichtung verfahrbar.

Bei der in Fig. 1 dargestellten Werkzeugmaschine 10 ist der Spindelstock 12 mit zwei Spindeln, nämlich einer ersten Spindel 13 und einer zweiten Spindel 14, ausgerüstet.

Der Fahrständer 11 ist in der Darstellung der Fig. 1 auf einem Sockel 15 senkrecht zur Zeichenebene verfahrbar. Der Sockel 15 ist wiederum in der Darstellung der Fig. 1 nach rechts und nach links auf einem raumfesten Maschinenbett 16 verfahrbar. Insgesamt kann der Spindelstock 12 damit entlang von drei kartesischen Koordinaten verfahren werden.

Zur Steuerung des Bewegungsablaufs und des gesamten Bearbeitungsvorganges ist ein Steuerpult 17 vorgesehen, das zur numerischen Steuerung der Werkzeugmaschine 10 dient.

Der Spindelstock 12 ist zu einer mittleren Symmetrieachse 18 im wesentlichen symmetrisch ausgebildet. Die Spindeln 13, 14 sind vertikalachsig ausgebildet. Ihre Achsen sind in Fig. 1 mit 23 bzw. 24 bezeichnet.

In der Nähe der ersten Spindel 13 befindet sich ein erster Greifarm 25 eines ersten Werkzeugwechslers 27, während ein zweiter Greifarm 29 eines zweiten Werkzeugwechslers 30 sich in der Nähe der zweiten Spindel 14 befindet. Mittels der Greifarme 25, 29 können Werkzeuge 31 bzw. 32 beliebiger Art in die Spindeln 13 bzw. 14 eingewechselt werden. In der Darstellung der Fig. 1 ist jeder Spindel 13, 14 jeweils nur ein Greifarm 25 bzw. 29 zugeordnet. Es versteht sich jedoch, daß jeder Spindel 13, 14 mehrere abwechselnd wirkende Greifarme zugeordnet werden können, die jeweils ein Werkzeug 31, 32 tragen und zwischen einer Arbeitsstellung, in der sich das Werkzeug in der Spindel 13, 14 befindet, sowie einer Magazinstellung wechseln, in der sie von der Spindel 13, 14 zurückgezogen das Werkzeug 31, 32 für das nächste Einwechseln bereithalten.

Das Besondere bei der Werkzeugmaschine 10 besteht darin, daß die zweite Spindel 14 in herkömmlicher Weise für Bohr- und Fräsarbeiten ausgelegt ist, während die erste Spindel 13 mit einem Plandrehkopf versehen ist, um z.B. an den zu bearbeitenden Werkstücken bestimmte Oberflächen plandrehen oder Konturen ausdrehen zu können.

Selbstverständlich kann die Werkzeugmaschine 12 auch so ausgelegt sein, daß nur eine Spindel, nämlich die Spindel 13, vorgesehen ist, die einen Plan- oder Ausdrehkopf trägt, in den außer Ausdrehwerkzeugen auch "übliche" Werkzeuge wie Bohrer, Fräser etc. eingewechselt werden, wobei diese Werkzeuge im Ausdrehkopf natürlich zentrisch positioniert werden müssen.

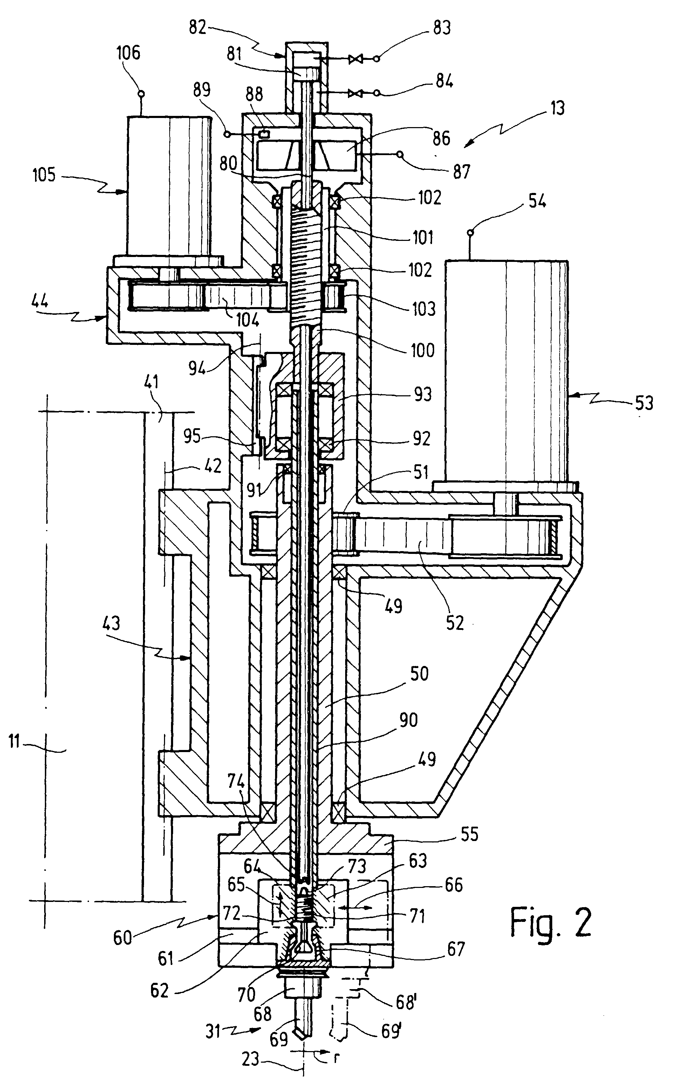

In der vergrößerten Querschnittsdarstellung gemäß Fig. 2 sind weitere Einzelheiten der ersten Spindel 13 zu erkennen.

Man erkennt zunächst, daß am Fahrständer 11 eine vertikale Schiene 41 angeordnet ist, auf der entlang einer vertikalen Achse 42 ein Schlitten 43 verfahrbar ist. Der Schlitten 43 trägt ein Spindelgehäuse 44. Die hierzu vorgesehenen Antriebs- und Steuereinheiten sind an sich bekannt und in Fig. 2 der Übersichtlichkeit halber nicht dargestellt.

Am unteren Ende des Spindelgehäuses 44 sind in einer zentralen Aufnahme derselben Lager 49 angebracht, die zur Lagerung eines Spindelrotors 50 dienen. Der Spindelrotor 50 ist in der Nähe seines oberen Endes drehfest mit einer Riemenscheibe 51 verbunden, die über einen Riemen 52 von einem Spindelantrieb 53 antreibbar ist. Über eine Steuerleitung 54 kann der Spindelrotor 50 damit in Drehung versetzt werden.

Das untere Ende des Spindelrotors 50 läuft in einen rotationssymmetrischen Flansch 55 aus. Der Flansch 55 dient zur Befestigung eines insgesamt mit dem Bezugszeichen 60 bezeichneten Plandrehkopfs.

Der Plandrehkopf 60 ist mit einer horizontal verlaufenden Schiene 61 versehen. Auf der Schiene 61 läuft ein Schlitten 62. Der Schlitten 62 ist mit einer in einer Vertikalebene wirkenden 45°-Verzahnung 63 versehen. Über eine Gegenverzahnung 64, deren Einzelheiten weiter unten noch erläutert werden, kann eine vertikale Bewegung (Pfeil 65) der Gegenverzahnung nach Art eines Keilgetriebes in eine horizontale Bewegung (Pfeil 66) der 45°-Verzahnung 63 umgesetzt werden. Die 45°-Verzahnung 63 und die Gegenverzahnung 64 bilden somit ein Getriebe zur Umsetzung einer Vertikalbewegung in eine Horizontalbewegung.

Die vertikale Antriebsbewegung dient dazu, den Schlitten 62 auf dem Plandrehkopf in horizontaler Richtung (Pfeil 66) zu verschieben.

Am unteren Ende des Schlittens 62 ist eine Werkzeugaufnahme 67 von an sich herkömmlicher Bauart angeordnet. Die Werkzeugaufnahme 67 ist als Innenkegel ausgebildet und dient zur formschlüssigen Aufnahme eines Werkzeughalters 68, der an seinem oberen Ende als Norm-Hohlschaftkegel ausgebildet ist, der eine komplementäre Form zur Werkzeugaufnahme 67 aufweist.

Der Werkzeughalter 68 trägt an seinem unteren Ende hier ein Plandrehwerkzeug 69, obwohl auch ein "übliches" Werkzeug 31, 32 aufgenommen sein könnte. Wenn nun über das Getriebe 63/64 eine vertikale Antriebsbewegung in eine Horizontalbewegung des Schlittens 62 entlang der Schiene 61 umgesetzt wird, so wird das Plandrehwerkzeug 69 in einer Horizontalebene verfahren, wie mit 68', 69' in Fig. 2 angedeutet. Die Schneide des Plandrehwerkzeugs 69, die sich ursprünglich in der Achse 23 der Spindel 13 befand, bewegt sich auf diese in radialer Richtung r von der Achse 23 weg. Auf diese an sich bekannte Weise kann somit der Plandrehkopf 60 zum Abdrehen von Flächen mit unterschiedlichem Drehradius eingesetzt werden.

Die Werkzeugaufnahme 67 umfaßt ferner ein Spreizglied 70, das im ungespreizten Zustand an das obere Ende des Werkzeughalters 68 heran oder in dieses einführbar ist, während im gespreizten Zustand das Spreizglied 70 den Werkzeughalter 68 formschlüssig ergreift und in einer vertikalen Richtung in die Werkzeugaufnahme 67 hineinzuziehen und dort einzuspannen vermag.

Das Spreizglied 70 ist im oberen Bereich mit einem Außengewindeabschnitt 71 versehen. Der Außengewindeabschnitt 71 läuft in einem Innengewindeabschnitt 72 der Werkzeugaufnahme 67, d.h. im Schlitten 62. Die Gewindeabschnitte 71, 72 bilden somit einen Spindeltrieb.

Am oberen Ende läuft das Spreizglied 70 in einen Mitnehmer 73, bspw. eine horizontale Rippe, aus. Oberhalb des Mitnehmers 73 ist ein Gegenstück 74 zu erkennen, das in der Formgebung an den Mitnehmer 73 angepaßt ist.

Das Gegenstück 74 bildet das untere Ende einer Kuppelstange 80. Die Kuppelstange 80 ist in der Achse 23 der Spindel 13 angeordnet. Am oberen Ende läuft die Kuppelstange 80 in einem Kolben 81 einer Kolben-Zylinder-Einheit 82 aus. Die Einheit 82 ist mit Steuerleitungen 83, 84 versehen, um den Kolben 81 in vertikaler Richtung verfahren zu können.

Auf diese Weise ist es möglich, das Gegenstück 74 entweder vom Mitnehmer 73 abzuheben, wie in Fig. 2 dargestellt ist, oder das Gegenstück 74 mit dem Mitnehmer 73 in Eingriff zu bringen.

Die Kuppelstange 80 ist unterhalb ihres oberen Endes von einer Kupplung 86 umgeben, die ihrerseits mit einer Steuerleitung 87 versehen ist. Die Kupplung 86 ist raumfest angeordnet und dient dazu, die Kuppelstange 80 drehfest zu arretieren, wenn die Steuerleitung 87 mit einem entsprechenden Signal beaufschlagt ist.

Die Kupplung 86 ist als Ratschkupplung ausgebildet. Dies bedeutet, daß die Kupplung 86 bis zu einem einstellbaren Grenzwert des einwirkenden Drehmoments hält und dann löst, wobei das gehaltene Teil, nämlich die Kuppelstange 80, sich nur bis in die nächste Deckungsstellung der Ratschelemente verdrehen kann, bspw. um 180°, bis die Kupplung 86 erneut formschlüssig faßt.

Zur Detektion eines solchen Ratschvorganges dient ein Sensor 88, der oberhalb der Kupplung 86 angeordnet ist. Über eine Steuerleitung 89 kann vom Sensor 88 ein Steuersignal abgeleitet werden.

Zur Betätigung der Gegenverzahnung 64 dient eine Zustellstange 90, die als Rohr die Kuppelstange 80 umgibt.

Am unteren Ende läuft die Zustellstange 90 in die bereits erwähnte Gegenverzahnung 64 aus, die in Fig. 2 der Übersichtlichkeit halber nicht im einzelnen dargestellt ist.

Die Zustellstange 90 ist im oberen Ende des Spindelrotors 50 mittels Radiallagern 91 in radialer Richtung gehalten. Über Axiallager 92 ist die Zustellstange 90 in einem Schlitten 93 gehalten. Dies bedeutet, daß die Zustellstange 90 sich zwar im Schlitten 93 drehen, aber nicht gegenüber dem Schlitten 93 axial verschieben kann.

Der Schlitten 93 ist entlang einer vertikalen Achse 94 an einer Schiene 95 verfahrbar, die auf der Innenseite des Spindelgehäuses 44 ausgebildet ist.

Der Schlitten 93 ist an seiner Oberseite starr mit einer Kugelgewindespindel 100 verbunden, die die Kuppelstange 80 ebenfalls lose umgibt. Auf der Kugelgewindespindel 100 läuft eine Spindelmutter 101, die ihrerseits in Axiallagern 102 axial festgehalten wird.

Die Spindelmutter 101 ist an ihrem unteren Ende drehfest mit einer Riemenscheibe 103 verbunden. Die Riemenscheibe 103 wird wiederum mittels eines Riemens 104 von einem Zustellantrieb 105 angetrieben. Eine Steuerleitung 106 dient zur Steuerung des Zustellantriebes 105.

Die Wirkungsweise der Anordnung gemäß Fig. 2 ist wie folgt:

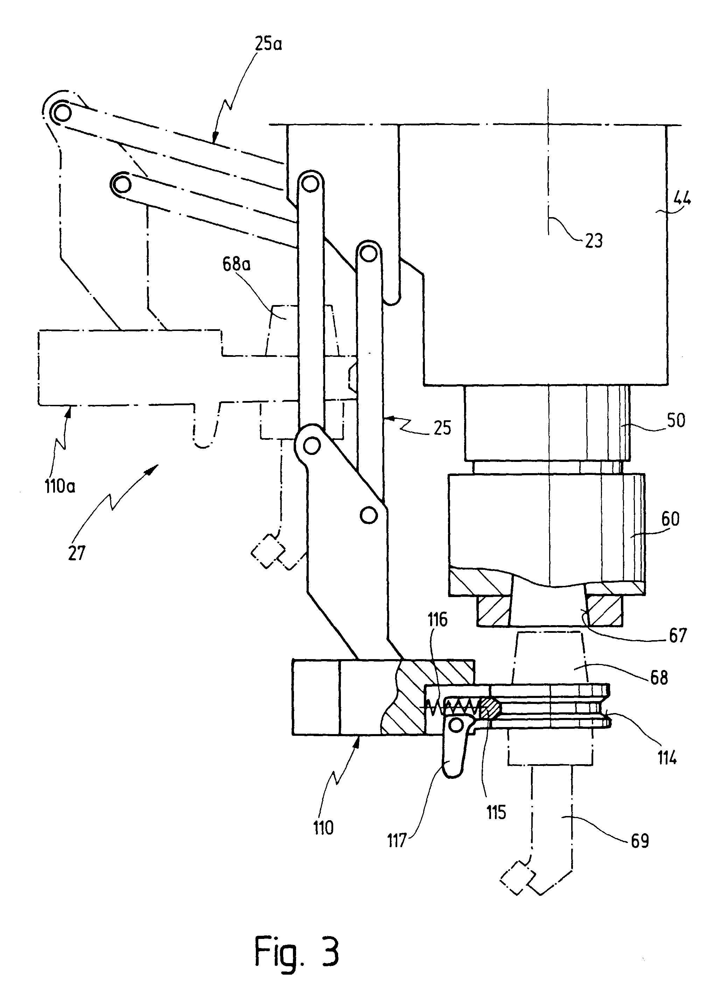

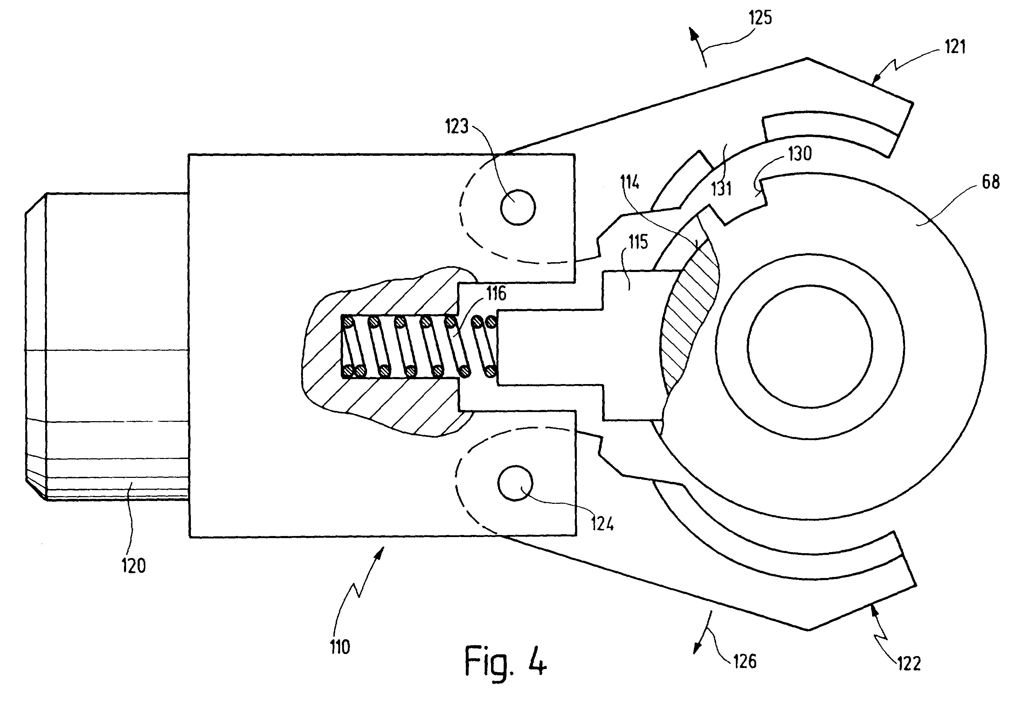

Wenn der Werkzeughalter 68 von unten in die Werkzeugaufnahme 67 eingeführt wird, welcher Vorgang weiter unten anhand der Fig. 3 und 4 noch näher beschrieben werden wird, gelangt das Spreizglied 70 in Eingriff mit dem Werkzeughalter 68. Durch Betätigen der Kolben-Zylinder-Einheit 82 wird nun die Kuppelstange 80 aus der in Fig. 2 eingezeichneten Stellung nach unten verfahren, und zwar soweit, daß das Gegenstück 74 den Mitnehmer 73 ergreift. Sobald dies geschehen ist, wird die Kupplung 86 über die Steuerleitung 87 geschlossen, wobei ein Grenzwert des Haltemomentes in der Kupplung 86 von bspw. 15 Nm eingestellt wird.

Durch Betätigen des Spindelantriebes 53 wird nun der Spindelrotor 50 und damit der Schlitten 62 und die Werkzeugaufnahme 67 verdreht. Da das Spreizglied 70 von der Kuppelstange 80 drehfest gehalten wird, bewegt sich das Spreizglied 70 über den durch die Gewindeabschnitte 71, 72 gebildeten Spindeltrieb nach oben und zieht den Werkzeughalter 68 in die Werkzeugaufnahme 67 ein.

Sobald das voreingestellte Drehmoment von z.B. 15 Nm erreicht ist, rastet die Ratschkupplung 86 aus. Dieser Ratschvorgang wird über den Sensor 88 erkannt und über die Steuerleitung 89 dem Steuerpult 17 mitgeteilt, worauf der Spindelantrieb 53 gestoppt wird.

Die Kupplung 86 wird nun wieder gelöst und die Kuppelstange 80 mittels der Kolben-Zylinder-Einheit 82 nach oben verfahren, so daß das Gegenstück 74 wieder außer Eingriff mit dem Mitnehmer 73 ist.

Das Plandrehwerkzeug 69 ist nun einsatzbereit. Je nach vorliegender Plandrehaufgabe wird das Plandrehwerkzeug 69 nun in radialer Richtung r verschoben. Hierzu wird der Zustellantrieb 105 über die Steuerleitung 106 angesteuert. Die vertikal feste Spindelmutter 101 wird über den Riementrieb 103, 104 verdreht und zieht die Kugelgewindespindel 100 nach oben oder nach unten. Die Kugelgewindespindel 100 nimmt über den Schlitten 93 die Zustellstange 90 in vertikaler Richtung mit. Die Gegenverzahnung 64 läuft nun auf der 45°-Verzahnung 63 des Schlittens 62, so daß dieser sich in Horizontalrichtung (Pfeil 66) verschiebt, bspw. in die in Fig. 2 eingezeichnete strichpunktierte Stellung 68', 69'. In dieser Stellung kann die Plandrehaufgabe ausgeführt werden.

Für einen nachfolgenden Werkzeugwechsel muß zunächst der Schlitten 62 auf der Schiene 61 wieder in eine Stellung verfahren werden, in der die Achse des Spreizgliedes 70 mit der Spindelachse 23 und damit der Kuppelstange 80 fluchtet. Dann können sich die vorstehend beschriebenen Vorgänge anschließen. Zum Ausspannen des Werkzeughalters 68 wird das Grenz-Drehmoment in der Kupplung 86 vorzugsweise höher eingestellt, z.B. auf 25 Nm, weil zum Lösen ein höheres Drehmoment erforderlich ist.

Wichtig dabei ist, daß der Plandrehkopf 60 erfindungsgemäß am Flansch 55 des Spindelrotors 50 verbleibt und nur die Plandrehwerkzeuge 69 ausgetauscht werden.

In den Fig. 3 und 4 sind nähere Einzelheiten des zugehörigen Werkzeugwechslers 27 dargestellt.

Der Werkzeugwechsler 27 umfaßt den Greifarm 25, der in herkömmlicher Weise als Parallelogrammgestänge ausgebildet ist. In Fig. 3 ist durchgezogen eine Arbeitsstellung und strichpunktiert eine Magazinstellung des Werkzeugwechslers 27 dargestellt.

Der Werkzeugwechsler 27 ist an seinem unteren freien Ende mit einem Greifer 110 versehen. Der Greifer 110 ergreift eine Greifnut 114 am Werkzeughalter 68. Mittels eines am Greifer 110 vorgesehenen Klemmsteins 115, der in die Greifnut 114 des erfaßten Werkzeughalters 68 greift, kann dieser gegen Vertikalbewegung gesichert werden. Der Klemmstein 115 liegt in der Greifnut 114 kontinuierlich unter der Wirkung einer Schraubenfeder 116 an. Mittels eines Hebels 117 kann die Feder 116 überdrückt und der Klemmstein 115 aus der Greifnut 114 abgehoben werden. Der Hebel 117 kann servomechanisch betätigt werden, vorzugsweise ist er aber als Handhebel ausgebildet.

Am rückwärtigen Ende des Greifers 110 ist eine Betätigungseinheit 120 angebracht, bspw. eine pneumatische, hydraulische oder elektromagnetische Betätigungseinheit. Die Betätigungseinheit 120 dient zum Betätigen zweier Klauen 121, 122, die symmetrisch in Achsen 123, 124 schwenkbar gehalten sind. Die Klauen 121, 122 können damit geöffnet werden, wie mit Pfeilen 125, 126 angedeutet, oder sie können dicht um den Werkzeughalter 68 herum gelegt werden. Weitere Einzelheiten der Betätigungseinheit eines solchen Greifers 110 sind z.B. in der EP 0 481 275 B1 beschrieben.

An dem in Fig. 1 oberen Umfang des Werkzeughalters 68 ist eine Rastnut 130 erkennbar. Der Rastnut 130 steht ein Raststein 131 gegenüber, der an der in Fig. 4 oberen Klaue 121 des Greifers 110 ausgebildet ist.

Die Wirkungsweise des in den Fig. 3 und 4 dargestellten Werkzeugwechslers 27 ist wie folgt:

Der Werkzeugwechsler 27 befindet sich zunächst in der in Fig. 3 strichpunktiert eingezeichneten Magazinstellung. Der Greifarm 25a ist in diesem Fall schräg nach oben und außen verschwenkt, so daß der Werkzeughalter 68a nach außen und nach oben vom Plandrehkopf 60 beabstandet ist. In dieser Stellung kann der Werkzeughalter 68a manuell bestückt werden, wenn eine neue Folge von Bearbeitungsvorgängen vorbereitet werden soll. Der Benutzer der Werkzeugmaschine betätigt dazu den Hebel 117, so daß bei geöffneten Klauen 121, 122 eine Entnahme des zuvor benutzten Werkzeughalters und eine Neubestückung mit dem für die nächste Bearbeitungsaufgabe erforderlichen Werkzeughalter 68a möglich ist.

Wenn im numerischen Steuerprogramm nun das betreffende Werkzeug aufgerufen wird, so wird der Werkzeughalter 27 aus der Magazinstellung in die Arbeitsstellung verschwenkt. Dabei wird der Werkzeughalter 68 zunächst der Werkzeugaufnahme 67 von unten angeboten, d.h. in eine Stellung gefahren, in der der Werkzeughalter 68 noch einen geringfügigen vertikalen Abstand zur Werkzeugaufnahme 67 hat.

Da die Anordnung in an sich bekannter Weise so getroffen ist, daß die Werkzeugaufnahme 67 in Vertikalrichtung relativ zum Werkzeugwechsler 27 verfahrbar ist, kann der Werkzeughalter 68 von unten in die Werkzeugaufnahme 67 eingefahren werden.

Während des bisher geschilderten Bewegungsablaufs ist es wichtig, daß der Werkzeughalter 68 in einer vorbestimmten Umfangsstellung gehalten wird. Dies wird dadurch bewirkt, daß bei geschlossenen Klauen 121, 122 der Raststein 131 in die Rastnut 130 greift, so daß der Werkzeughalter 68 in Umfangsrichtung fixiert ist. Diese Umfangs-Bezugsposition wird damit bereits während des Bestückens des Greifers 110 festgelegt. Zusätzlich ist der Werkzeughalter 68, wie erwähnt, in vertikaler Richtung mittels des Klemmsteins 115 fixiert, der in die Greifnut 114 eingreift.

Wenn nun der Werkzeughalter von unten in den Bereich der Werkzeugaufnahme 67 herangefahren wird, so gelangen formschlüssige Mitnahmeelemente, bspw. ein Nutenstein am Spindelrotor 50 und eine Nut in der oberen Radialfläche des Werkzeughalters 68 (jeweils nicht dargestellt), miteinander in Eingriff. Die definierte Umfangsstellung ist damit weiter gewährleistet. Die Klauen 121, 122 können dann mittels der Betätigungseinheit 120 geöffnet werden, wie in Fig. 4 dargestellt. Der Werkzeughalter 68 ist damit frei drehbar, aber in Vertikalrichtung immer noch fixiert, wofür das Zusammenspiel zwischen Werkzeugaufnahme 67/Hohlschaftkegel und Klemmstein 115/Greifnut 114 sorgt.

Nachdem sich der Werkzeughalter 68 in dieser Stellung befindet, beginnt der oben im Zusammenhang mit der Figur 2 bereits beschriebene Einkuppelvorgang, in dem nach dem Arretieren der Kuppelstange 80 der Spindelrotor 50 über die Spindel 13 die Werkzeugaufnahme 67 dreht, um das Spreizglied 70 anzuziehen. Da der Werkzeughalter 68 zu diesem Zeitpunkt bereits drehfest mit der Werkzeugaufnahme 67 gekuppelt ist, dreht sich die Werkzeugaufnahme 68 während dieses Spannvorganges mit, weshalb zuvor die Klauen 121, 122 geöffnet werden mußten.

Der Greifer 110 kann nun in dieser Stellung am Werkzeughalter 68 verbleiben, auch wenn dieser seine Bearbeitungsaufgabe durchführt. Alternativ ist es aber auch möglich, den Greifer 110 in Horizontalrichtung vom Werkzeughalter 68 weg zu fahren, so daß kein mechanischer Kontakt mehr vorhanden ist.

## Patentansprüche

1. Werkzeugmaschine mit mindestens einer Spindel (13), der zumindest ein Werkzeugwechsler (27) zum Einwechseln von Werkzeugen (31, 69) zugeordnet ist, wobei die Spindel (13) mit einem Plandrehkopf (60) bestückt ist, der Mittel zum numerisch gesteuerten Verstellen eines Plandrehwerkzeugs (69) in einer Richtung (r) senkrecht zur Achse (23) der Spindel (13) umfaßt, und wobei der der Spindel (13) zugeordnete Werkzeugwechsler (27) einen Greifarm (25) umfaßt, an dessen freiem Ende ein Greifer (110) angeordnet ist, womit der Werkzeugwechsler (27) zum Einwechseln von Werkzeugen (31, 69) in den Plandrehkopf (60) ausgebildet ist, dadurch gekennzeichnet, daß der Greifer (110) einen Werkzeughalter (68) formschlüssig umfaßt, daß dem Greifer (110) erste Rastmittel (114, 115) zum Verrasten des Werkzeughalters (68) in Achsrichtung sowie zweite Rastmittel (130, 131) zum Verrasten des Werkzeughalters (68) in Umfangsrichtung zugeordnet sind, und daß die Rastmittel (114, 115/130, 131) separat betätigbar sind.

2. Werkzeugmaschine nach Anspruch 1, dadurch gekennzeichnet, daß in einer Arbeitsstellung, in der der Werkzeughalter (68) in einer Werkzeugaufnahme (67) des Plandrehkopfes (60) eingespannt ist, die ersten Rastmittel (114, 115) verrastet und die zweiten Rastmittel (130, 131) nicht verrastet sind.

3. Werkzeugmaschine nach Anspruch 1 oder 2, dadurch gekennzeichnet, daß in einer Magazinstellung, in der der Werkzeughalter (68) sich im Abstand von einer Werkzeugaufnahme (67) des Plandrehkopfes (60) befindet, die ersten Rastmittel (114, 115) manuell entrastbar sind.

4. Werkzeugmaschine nach einem oder mehreren der Ansprüche 1 bis 3, dadurch gekennzeichnet, daß die ersten Rastmittel (114, 115) unter Federkraft (116) in Eingriff miteinander stehen.

5. Werkzeugmaschine nach einem oder mehreren der Ansprüche 1 bis 4, dadurch gekennzeichnet, daß die Mittel zum Verstellen des Plandrehwerkzeuges (69) ein Getriebe umfassen, das eine in Richtung der Achse (23) der Spindel (13) wirkende Kraft in eine in der Richtung (r) senkrecht zur Achse (23) wirkende Betätigungskraft zum Verstellen des Plandrehwerkzeuges (69) umsetzt.

6. Werkzeugmaschine nach Anspruch 5, dadurch gekennzeichnet, daß das Getriebe eine 45°-Verzahnung (63) mit Gegenverzahnung (64) umfaßt.

7. Werkzeugmaschine nach Anspruch 5 oder 6, dadurch gekennzeichnet, daß die in Richtung der Achse (23) wirkende Kraft mittels einer Zustellstange (90) erzeugt wird, wobei die Zustellstange (90) über einen Spindeltrieb (100, 101) in Richtung der Achse (23) verschiebbar ist.

8. Werkzeugmaschine nach einem oder mehreren der Ansprüche 1 bis 7, bei der der Plandrehkopf (60) eine Werkzeugaufnahme (67) mit einem Spreizglied (70) zum formschlüssigen Ergreifen und Spannen des Werkzeughalters (68) umfaßt, dadurch gekennzeichnet, daß das Spreizglied (70) durch Verdrehen der Spindel (13) zum Spannen und/oder Lösen des Werkzeughalters (68) betätigbar ist.

9. Werkzeugmaschine nach Anspruch 8, dadurch gekennzeichnet, daß dem Spreizglied (70) ein Spindeltrieb (71, 72) zugeordnet ist, der durch Verdrehen der drehfest mit der Spindel (13) verbundenen Werkzeugaufnahme (67) betätigt wird.

10. Werkzeugmaschine nach Anspruch 9, dadurch gekennzeichnet, daß der Spindeltrieb durch einen Außengewindeabschnitt (71) am Spreizglied (70) sowei einen Innengewindeabschnitt (72) an der Werkzeugaufnahme (67) gebildet wird.

11. Werkzeugmaschine nach Anspruch 10, dadurch gekennzeichnet, daß das Spreizglied (70) einen Mitnehmer (73) aufweist, über den der Außengewindeabschnitt (71) im Innengewindeabschnitt (72) verdrehbar ist.

12. Werkzeugmaschine nach Anspruch 11, dadurch gekennzeichnet, daß der Mitnehmer (73) mittels einer Kuppelstange (80) verdrehbar ist, die an einem Ende mit einem zum Mitnehmer (73) komplementären Gegenstück (74) versehen und drehfest fixierbar ist.

13. Werkzeugmaschine nach einem oder mehreren der Ansprüche 8 bis 12, dadurch gekennzeichnet, daß das Spreizglied (70) drehfest fixierbar ist.

## Claims

1. A machine tool comprising at least one spindle (13) with which is associated at least one tool changer (27) for exchanging tools (31, 69), wherein said spindle (13) is fitted with a facing head (60) having means for numerically controlled displacement of a facing tool (69) in a direction (r) perpendicular to an axis (23) of said spindle (13), and wherein said tool changer (27) associated with said spindle (13) comprises a gripper arm (25) having a gripper (110) arranged at its free end, whereby said tool changer (27) is designed for exchanging tools (31, 69) at said facing head, characterized in that said gripper (110) positively encloses a tool holder (68), first snap means (114, 115) for snap-locking said tool holder (68) in the axial direction and second snap means (130, 131) for snap-locking said tool holder (68) in the circumferential direction are associated with said gripper (110), and said snap means (114, 115/130, 131) are separately actuatable.

2. The machine tool of claim 1, characterized in that in a working position in which the tool holder (68) is clamped into a tool receptacle (67) of the facing head (68), said first snap means (114, 115) are snap-locked and said second snap means (130, 131) are not snap-locked.

3. The machine tool of claim 1 or claim 2, characterized in that in a magazine position in which the tool holder (68) is located at a distance from a tool receptacle (67) of said facing head (60) said first snap means (114, 115) can be manually unlocked.

4. The machine tool of any or several of claims 1 - 3, characterized in that said first snap means (114, 115) are mutually engaged under spring force (116).

5. The machine tool of any or several of claims 1 - 4, characterized in that said means for displacement of said facing tool (69) comprise a drive train that converts a force acting in the direction of the axis (23) of the spindle (13) into an actuation force acting in the direction (r) perpendicular to the axis (23), for displacement of the facing tool (69).

6. The machine tool of claim 5, characterized in that the drive train comprises a 45° tooth set (63) with a mating tooth set (64).

7. The machine tool of claim 5 or claim 6, characterized in that the force acting in the direction of the axis (23) is generated by means of an adjusting rod (90), the adjusting rod (90) being displaceable in the direction of the axis (23) by means of a spindle drive (100, 101).

8. The machine tool of any or several of claims 1 - 7, wherein said facing head (60) comprises a tool receptacle (69) with a spreading member (70) for positive gripping and clamping of the tool holder (68), characterized in that the spreading member (70) is actuatable by rotating said spindle (13) to clamp and/or release said tool holder (68).

9. The machine tool of claim 8, characterized in that a spindle drive (71, 72) actuated by rotation of the tool receptacle (67) that is joined nonrotatably to the spindle (13), is associated with the spreading member (70).

10. The machine tool of claim 9, characterized in that the spindle drive is comprised of an externally threaded section (71) on the spreading member (70) and an internally threaded section (72) on the tool receptacle (67).

11. The machine tool of claim 10, characterized in that the spreading member (70) has a catch (73) by means of which the externally threaded section (71) can be rotated in the internally threaded section (72).

12. The machine tool of claim 11, characterized in that the catch (73) is rotatable by means of a coupling rod (80) that is equipped at one end with a mating element (74) complementary to the catch (73), and can be immobilized nonrotatably.

13. The machine tool of any or several of claims 8 - 12, characterized in that the spreading member (70) can be immobilized nonrotatably.

## Revendications

1. Machine-outil comportant au moins une broche (13) qui est associée à au moins un changeur d'outil (27) pour le changement d'outils (31, 69), la broche (13) étant équipée d'une tête à surfacer (60) qui comprend des moyens pour le déplacement , commandé numériquement, d'un outil à surfacer (69) dans une direction (r) perpendiculaire à l'axe (23) de la broche (13), et le changeur d'outil (27), associé à la broche (13), comprenant un bras de préhension (25) à l'extrémité libre duquel est disposée une pince (110), le changeur d'outil (27) étant ainsi configuré pour changer des outils (31, 69) dans la tête à surfacer (60), caractérisée en ce que la pince (110) enserre, par complémentarité de forme, un porte-outil (68), en ce qu'à la pince (110) sont affectés des premiers moyens d'arrêt (114, 115) pour l'arrêt du porte-outil (68) dans la direction axiale ainsi que des seconds moyens d'arrêt (130, 131) pour l'arrêt du porte-outil (68) dans la direction périphérique, et en ce que les moyens d'arrêt (114, 115/ 130, 131) peuvent être actionnés séparément.

2. Machine-outil selon la revendication 1, caractérisée en ce que dans une position de travail, dans laquelle le porte-outil (68) est serré dans un logement d'outil (67) de la tête à surfacer (60), les premiers moyens d'arrêt (114, 115) sont verrouillés et les seconds moyens d'arrêt (130, 131) ne sont pas verrouillés.

3. Machine-outil selon la revendication 1 ou 2, caractérisée en ce que dans une position de magasin, dans laquelle le porte-outil (68) se trouve à distance d'un logement d'outil (67) de la tête à surfacer (60), les premiers moyens d'arrêt (114, 115) peuvent être déverrouillés manuellement.

4. Machine-outil selon une ou plusieurs des revendications 1 à 3, caractérisée en ce que les premiers moyens d'arrêt (114, 115) sont en prise entre eux sous l'effet d'une force de ressort (116).

5. Machine-outil selon une ou plusieurs des revendications 1 à 4, caractérisée en ce que les moyens de déplacement de l'outil à surfacer (69) comprennent un engrenage qui convertit une force agissant dans la direction de l'axe (23) de la broche (13) en une force d'actionnement, agissant dans la direction (r) perpendiculaire à l'axe (23), afin de déplacer l'outil à surfacer (69).

6. Machine-outil selon la revendication 5, caractérisée en ce que l'engrenage comprend une denture à 45° (63) avec contre-denture (64).

7. Machine-outil selon la revendication 5 ou 6, caractérisée en ce que la force qui agit dans la direction de l'axe (23) est produite au moyen d'une barre d'avance (90), la barre d'avance (90) pouvant être déplacée dans la direction de l'axe (23), par l'intermédiaire d'un mécanisme à vis (100, 101).

8. Machine-outil selon une ou plusieurs des revendications 1 à 7, dans laquelle la tête à surfacer (60) comprend un logement d'outil (67) avec un organe expansible (70) pour saisir et serrer le porte-outil (68) par complémentarité de forme, caractérisée en ce que l'organe expansible (70) peut être actionné par rotation de la broche (13) pour serrer et/ou desserrer le porte-outil (68).

9. Machine-outil selon la revendication 8, caractérisée en ce qu'à l'organe expansible (70) est associé un mécanisme à vis (71, 72) qui est actionné par rotation du logement d'outil (67), lié solidairement en rotation à la broche (13).

10. Machine-outil selon la revendication 9, caractérisée en ce que le mécanisme à vis est formé par un segment de filetage extérieur (71) de l'organe expansible (70) ainsi que par un segment de taraudage (72) du logement d'outil (67).

11. Machine-outil selon la revendication 10, caractérisée en ce que l'organe expansible (70) comporte un entraîneur (73) par lequel le segment de filetage extérieur (71) peut tourner dans le segment de taraudage (72).

12. Machine-outil selon la revendication 11, caractérisée en ce que l'entraîneur (73) peut tourner au moyen d'une barre de couplage (80) qui est pourvue, à une extrémité, d'une contre-pièce (74) complémentaire de l'entraîneur (73) et qui peut être fixée solidairement en rotation à celui-ci.

13. Machine-outil selon une ou plusieurs des revendications 8 à 12, caractérisée en ce que l'organe expansible (70) peut être immobilisé en rotation.
